# EUROPÄISCHE PATENTSCHRIFT

(11) **EP 3 945 703 B1**
(45) Veröffentlichungstag und Bekanntmachung des Hinweises auf die Patenterteilung: **29.10.2025**
(21) Anmeldenummer: 20188356.8
(22) Anmeldetag: 29.07.2020
(51) Int. Cl.: H04L 9/40, H04L 67/12, H04L 67/00

(54) **VERFAHREN, NETZWERK, COMPUTERPROGRAMMPRODUKT UND VORRICHTUNG ZUM FERNGESTEUERTEN AKTUALISIEREN EINES ZIELGERÄTES IN EINEM NETZWERK, INSBESONDERE IN EINEM BAHNAUTOMATISIERUNGSSYSTEM**
METHOD, NETWORK, COMPUTER PROGRAMM PRODUCT AND APPARATUS FOR REMOTELY UPDATING A TARGET DEVICE IN A NETWORK, IN PARTICULAR IN A A RAIL AUTOMATION SYSTEM
PROCÉDÉ, RÉSEAU, PRODUIT PROGRAMME D'ORDINATEUR ET APPAREIL POUR LA MISE À JOUR TÉLÉCOMMANDÉE D'UN APPAREIL CIBLE DANS UN RÉSEAU, EN PARTICULIER DANS UN SYSTÈME D'AUTOMATISATION FERROVIAIRE

(43) Veröffentlichungstag der Anmeldung: 02.02.2022
(73) Patentinhaber: Siemens Mobility GmbH, 80997 München (DE)
(72) Erfinder: Graf, Florian, 38300 Wolfenbüttel (DE); Jähn, Marcel, 38118 Braunschweig (DE); Reinert, Jens, 38302 Wolfenbüttel (DE)
(74) Vertreter: Siemens Patent Attorneys

(56) Entgegenhaltungen:
- EP-A1- 3 306 891
- US-A1- 2013 318 357
- US-A1- 2019 190 703

## Beschreibung

Die Erfindung betrifft ein Verfahren zum ferngesteuerten Aktualisieren eines Zielgerätes in einem Netzwerk, insbesondere einem Bahnautomatisierungssystem. Außerdem betrifft die Erfindung ein Netzwerk mit mindestens einem Zielgerät, insbesondere Bahnautomatisierungssystem. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Zukünftige Bahnautomatisierungssysteme werden mehr und mehr dezentral aufgebaut sein. Daher ist es schwieriger geworden, solche dezentralen Systeme mit Aktualisierungen der Software zu versorgen. Dabei stellt sowohl die sichere Übertragung der Aktualisierungen zu den einzelnen Geräten als auch die Sicherstellung des Betriebs eine Herausforderung bei der Bewältigung der Update-Aufgaben (d. h. Aktualisierungsaufgabe) dar.

Gemäß der US 2018/0011703 A1 ist beschrieben, dass eine Vielzahl von Fahrzeugen an Bord Server aufweisen kann, wobei wenigstens zwei weitere Vorrichtungen vorgesehen sind, mit denen Daten zur Initiierung der Fahrzeuge gespeichert und zur Verfügung gestellt werden können. Zu diesem Zweck ist ein lokales Netzwerk vorgesehen. Über eine Funkschnittstelle können die besagten Daten den Fahrzeugen zur Verfügung gestellt werden, wobei diese die vorgehaltenen Daten modifizieren können.

Dokument US 2019/190703 A1 betrifft ein Verfahren zum Kommunizieren geschützter Daten an ein Fahrzeug einer Fahrzeugflotte und umfasst das Verschlüsseln der geschützten Daten, die konfiguriert sind, um die Steuersysteme des Fahrzeugs zu aktualisieren mit einem Verschlüsselungsschlüssel. Die verschlüsselten geschützten Daten werden basierend auf Bandbreite, Kosten und geografischem Zugang zum Fahrzeug über ein ausgewähltes Netzwerk aus einem oder mehreren Datennetzwerken an das Fahrzeug übertragen.

Die Erfindung betrifft die Aufgabenstellung, bei einer ferngesteuerten, d.h. remote durchgeführten Aktualisierung der Software (Softwareupdate) durch ein netzwerkgestütztes Update-Verfahren bzw. ein Netzwerk sicherzustellen, dass die richtige Software auf das richtige Gerät zur richtigen Zeit aufgespielt wird und gleichzeitig die Integrität und die Vertraulichkeit der Updates gesichert ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß durch Anspruch 1 gelöst.

Das System sorgt dafür, dass die neue Software nur verschlüsselt den Provider verlässt. Dadurch werden die Integrität und die Vertraulichkeit der Software sichergestellt. Die einzelnen Geräte lassen sich eindeutig identifizieren und nur das richtige Gerät ist in der Lage, sein Update zu entschlüsseln und zu verarbeiten. Eine Identifizierung des Zielgerätes erfolgt vorteilhaft mithilfe eines Gerätezertifikates, welches auf dem Zielgerät vorgehalten wird. Zur Identifizierung kann das Zielgerät das Gerätezertifikat an den Provider des Updates senden.

Die Entschlüsselung des Updates erfolgt sofort oder zumindest zeitnah, nachdem der symmetrische Schlüssel im Zielgerät entschlüsselt wurde. Somit ist durch das Empfangen und Entschlüsseln des symmetrischen Schlüssels im Zielgerät, welche durch das Senden des verschlüsselten symmetrischen Schlüssels an das Zielgerät ausgelöst wird, eine gezielte Steuerung des Zeitpunkts möglich, zu dem das Update installiert werden soll. Die Übertragung des verschlüsselten Updates ist hingegen jederzeit möglich, sodass das verschlüsselte Update als Datei im Zielgerät zum Zeitpunkt der Übertragung des verschlüsselten symmetrischen Schlüssels bereits vorliegt.

Wesentlich für die Erfindung ist, dass das verschlüsselte Update (verschlüsselt mit dem symmetrischen Schlüssel) nur dann im Zielgerät richtig entschlüsselt werden kann, wenn der symmetrische Schlüssel für die Verschlüsselung des Updates entschlüsselt wurde. Dies ist erst dann möglich, wenn der verschlüsselte symmetrische Schlüssel zur Entschlüsselung an das Zielgerät übergeben wurde (der asymmetrische private Schlüssel steht dann im Zielgerät bereits zur Verfügung) . Mit anderen Worten kann durch Übertragung des verschlüsselten symmetrischen Schlüssels gesteuert werden, ab welchem Zeitpunkt das Update überhaupt entschlüsselt und anschließend installiert werden kann. Hierdurch wird vorteilhaft zuverlässig verhindert, dass das Update versehentlich zu einem falschen Zeitpunkt auf das Zielgerät angewendet wird.

Um ein Update auf einem Zielgerät zu installieren, müssen bestimmte Voraussetzungen erfüllt sein. Das Zielgerät muss für das Update zur Verfügung stehen, d. h. das Zielgerät darf im Netzwerk nicht zur Bewältigung einer Aufgabe benötigt werden, welche keinen Aufschub duldet. Dies ist beispielsweise bei Systemen der Bahnautomatisierung der Fall, wenn das Zielgerät am reibungslosen Ablauf des Zugverkehrs beteiligt ist oder eine sicherheitsrelevante Funktion übernimmt. Eine Aktualisierung des Zielgeräts könnte dann beispielsweise in einer Betriebspause, also zum Beispiel in der Nacht, erfolgen.

Ein weiterer Aspekt ist zu beachten, dass verschiedene Zielgeräte miteinander kompatibel sein müssen, um einen reibungslosen Ablauf der Funktion des Netzwerkes (beispielsweise des Bahnbetriebs) zu gewährleisten. Deswegen muss das Installieren von Updates auch derart abgestimmt werden, dass Zielgeräte, deren Interaktion durch eine Installation eines Updates auf nur einem der Zielgeräte eingeschränkt wäre, gleichzeitig upgedatet werden. Auch dies lässt sich durch ein vorzugsweise automatisches Management der Updates gewährleisten.

Hierdurch wird eine vollständige oder zumindest weitgehend vollständige Automatisierung des Updateprozesses von ethernetbasierenden Systemen (d. h. einem Verbund von Geräten in einem Netzwerk, von denen ein Zielgerät aktualisiert werden soll), insbesondere Bahnautomatisierungssystemen (d. h. Systemen zur automatischen Steuerung des Bahnbetriebs) mit und ohne safety integrity level (SIL) unter Berücksichtigung des geforderten Sicherheitsstandards realisiert. Vorteilhaft gelingt die Eliminierung der meisten Fehlerquellen durch menschliche Interaktion während des Updateprozesses. Die Folge ist eine starke Beschleunigung des gesamten Vorganges und damit verbunden ein hohes Kosteneinsparungspotential (Personalkosten, Wartungspersonal). Bei dem Verfahren können sowohl streckenseitige als auch zugseitige Zielgeräte upgedatet (aktualisiert) werden. Die Updates können sowohl drahtgebunden als auch drahtlos übertragen werden. Das Automatisierungssystem kann nicht nur für Eisenbahnsysteme, sondern auch für allgemeine Industrie Systeme (SCADA, ICS...) eingesetzt werden.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder auch als Messwerte. Die erforderlichen Anweisungen Programmbefehle sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten und/oder Softwarekomponenten über Schnittstellen. Die Schnittstellen können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können. Dies gilt auch für den Geräteverbund und somit insbesondere auch für das Zielgerät, wobei die Geräte aus Computern bestehen können oder Computer oder zumindest Prozessoren aufweisen.

Unter einem "Prozessor" kann im Zusammenhang mit der Erfindung beispielsweise eine Maschine, zum Beispiel ein Sensor zur Erzeugung von Messwerten oder eine elektronische Schaltung, verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder eines Datenträgers) verstanden werden.

Als "Cloud" soll eine Umgebung für ein "Cloud-Computing" (deutsch Rechnerwolke oder Datenwolke) verstanden werden. Gemeint ist eine IT-Infrastruktur, welche über ein Netzwerk wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Angebot und Nutzung dieser Dienstleistungen erfolgen dabei ausschließlich durch technische Schnittstellen und Protokolle, etwa mittels eines Webbrowsers. Die Bandbreite der im Rahmen des Cloud-Computings angebotenen Dienstleistungen umfasst das gesamte Spektrum der Informationstechnik und beinhaltet unter anderem Infrastruktur, Plattformen und Software.

Als "Programmmodule" sollen einzelne Funktionseinheiten verstanden werden, die den Programmablauf ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die Übertragung des verschlüsselten symmetrischen Schlüssels in Abhängigkeit von einer Verfügbarkeit des Zielgerätes für ein Update erfolgt. Mit anderen Worten soll das Update nur entschlüsselt werden können, wenn das Zielgerät auch verfügbar ist. Solange der verschlüsselte symmetrische Schlüssel allerdings noch nicht übertragen wurde, kann ausgeschlossen werden, dass das Update durchgeführt wird, da dies mit dem nicht entschlüsselten Update nicht möglich ist.

Vorteilhaft sichert die Verschlüsselung des symmetrischen Schlüssels somit die Prozedur einer Aktualisierung mehrfach ab. Zum einen kann auf den verschlüsselten symmetrischen Schlüssel sowie auf das verschlüsselte Update bei der Übertragung nicht zugegriffen werden, wodurch diese Daten vor einer Manipulation gestützt sind. Außerdem kann ein Update, welches versehentlich auf ein falsches Zielgerät übertragen wurde, dort nicht entschlüsselt werden, weil der zugehörige private asymmetrische Schlüssel zur Entschlüsselung des symmetrischen Schlüssels nicht verfügbar ist.

Zuletzt kann der Zeitpunkt, zu dem ein Update auf dem richtig adressierten Zielgerät erfolgen soll, durch Zusenden oder besser Nicht-Zusenden des verschlüsselten symmetrischen Schlüssels gesteuert werden, da die Übertragung dieses Schlüssels die Voraussetzung dafür ist, dass das Update entschlüsselt und anschließend installiert werden kann. Vorher kann eine Aktualisierung ausgeschlossen werden, zum Beispiel, wenn der Betrieb des Bahnautomatisierungssystems ein Update der betreffenden Komponente (Zielgerät) nicht zulässt.

Gemäß einer Ausgestaltung der Erfindung ist vorgesehen, dass die Übertragung des verschlüsselten symmetrischen Schlüssels automatisch oder über die Benutzerschnittstelle initiiert erfolgt.

Für eine manuelle Eingabe zur Initiierung des Updates ist eine Benutzerschnittstelle vorgesehen. Hier kann ein Benutzer, beispielsweise ein Fahrdienstleiter, in einer Leitzentrale entscheiden, wann ein Zielgerät nicht benötigt wird und daher das Update manuell gestartet werden kann.

Allerdings ist es auch vorteilhaft, wenn die Übertragung des verschlüsselten symmetrischen Schlüssels automatisch erfolgt. Hierbei werden die Erfordernisse einer Verfügbarkeit des Zielgerätes selbstverständlich ebenfalls beachtet. Hierbei können Daten beachtet werden, welche für das Bahnautomatisierungssystem erhoben wurden, beispielsweise ein Fahrplan oder die aktuelle Position von sich auf dem Schienennetz befindenden Zügen. Hieraus kann abgeleitet werden, welche Zielgeräte im Augenblick nicht benötigt werden, sodass ein Update initiiert werden kann.

Gemäß einer Ausgestaltung der Erfindung ist vorgesehen, dass ein Nachweis, dass das Zielgerät aktualisiert wurde, verschlüsselt erfolgt.

Hierdurch lässt sich vorteilhaft sicherstellen, dass eine erfolgreich durchgeführte Aktualisierung mit einem Update durch das zugehörige Bahnautomatisierungssystem erfasst werden kann. Dies ist beispielsweise dafür wichtig, den Betriebsmodus an die Aktualisierung anzupassen. Sollten durch die Aktualisierung Kompatibilitätsprobleme zu noch nicht aktualisierten Zielgeräten des Bahnautomatisierungssystems auftreten, so muss auch hierfür eine Lösung gefunden werden (gleichzeitiges Aufspielen des Updates oder vorläufige Sperrung der Zielgeräte, die in dem Bahnautomatisierungssystem im Augenblick nicht arbeiten können. Eine vorteilhafte Lösung wäre hier ein Rollback-Verfahren, um den letzten funktionierenden Softwarestand wieder in die Zielgeräte einzuspielen. Eine weitere vorteilhafte Lösung wäre auch ein Rollback-Verfahren, um den letzten funktionierenden Softwarestand wieder in die Zielgeräte einzuspielen, falls es sich herausstellt, das ein Update fehlerhaft war.

Gemäß einer Ausgestaltung der Erfindung ist vorgesehen, dass das Update in mehreren Stufen durchgeführt wird, wobei für jede Stufe des Updates ein Softwarepaket und ein zugehöriger verschlüsselter symmetrischer Schlüssel erzeugt wird. An dieser Stelle sei bemerkt, dass die Aktualisierung mittels der einzelnen Softwarepakete grundsätzlich so abläuft, wie oben zu den einstufigen Updates beschrieben. Dies bedeutet, dass das Update Stufe für Stufe nacheinander oder in mehreren Stufen auf einmal in dem Zielgerät installiert werden kann. Man kann somit ein Zielgerät komplett updaten, oder nach und nach nur die notwendigen Softwareteile. Auf das gesamte Kundensystem bezogen können Updates auch stufenweise zunächst nur auf bestimmten Zuglinien ausgerollt werden, später auf anderen.

Ein stufenweises Update hat den Vorteil, dass während des Updates die Zielgeräte miteinander kompatibel gehalten werden. Die einzelnen Softwarepakete können außerdem klein sein, so dass ein Update vorteilhaft vergleichsweise schnell durchgeführt werden kann. Dadurch können für das Update des Zielgerätes auch Zeiträume verwendet werden, in denen das Zielgerät nur kurz für ein Update verfügbar ist.

Gemäß einer Ausgestaltung der Erfindung ist vorgesehen, dass zur Übertragung des verschlüsselten symmetrischen Schlüssels ein Aktivierungsclient genutzt wird.

In einem Aktivierungsclient können die für die Aktivierung des Updates (durch Senden des verschlüsselten symmetrischen Schlüssels an das Zielgerät) notwendigen Informationen gesammelt ausgewertet werden. Dies können eine Verfügbarkeit des Zielgerätes sein, welches zum Beispiel durch eine Nachricht des Zielgerätes angezeigt werden kann. Alternativ ist es allerdings auch möglich, Informationsquellen bezüglich des Bahn Automatisierungssystems auszuwerten. Als Beispiele seien ein Fahrplan und die Echtzeitermittlung von Zügen in dem untersuchten das Zielgerät aufweisenden Gleisabschnitt genannt. Außerdem kann beispielsweise eine Betriebspause des Bahnautomatisierungssystems genutzt werden, um Updates auf Zielgeräte zu spielen.

Gemäß einer Ausgestaltung der Erfindung ist vorgesehen, dass eine Steuerung der Updates durch die Übertragung des verschlüsselten, symmetrischen Schlüssels in Abhängigkeit von der Verfügbarkeit des Zielegerätes durchgeführt wird.

Bei dieser Variante der Erfindung ist es erforderlich, dass das Update sofort nach Übertragung des verschlüsselten symmetrischen Schlüssels an das Zielgerät durchgeführt wird. Die Übertragung des Schlüssels ist somit die Initiierung des Updates, wobei nach der Übertragung des Schlüssels das Gerät für das Update auch verfügbar sein soll. Insbesondere, wenn, wie vorstehend schon erklärt, das Management der Updates von Zielgeräten in dem Bahn Automatisierungssystem durch einen Aktivierungsclient gesteuert wird, so liegen diesem alle wichtigen Informationen vor, um das Update zu planen. Demgemäß ist ein weiterer Eingriff in den Ablauf des Updates, beispielsweise durch ein Startsignal aus der Leitzentrale, nicht erforderlich.

Gemäß einer Ausgestaltung der Erfindung ist vorgesehen, dass die Steuerung der Updates auch im Hinblick auf die Kompatibilität des Zielgerätes mit anderen Zielgeräten des Geräteverbundes nach dem Update vorgenommen wird.

Diese Problematik ist bereits erwähnt worden, sie hängt damit zusammen, dass das Zusammenspiel mit Geräten, die mittels eines Updates für eine neue Software Version vorbereitet wurden, eventuell nicht abwärts kompatibel mit noch nicht upgedateten anderen Zielgeräten sind. In diesem Fall müssen die betreffenden Zielgeräte in Gruppen upgedatet werden oder es wird eine betriebsbedingte Pause abgewartet, in der die Zielgeräte nicht benötigt werden und daher für ein Update zur Verfügung stehen.

Gemäß einer Ausgestaltung der Erfindung ist vorgesehen, dass das Zielgerät oder die Zielegeräte die Verfügbarkeit für ein Update durch eine Update-Statusinformation anzeigen.

Eine Update-Statusinformation kann vorteilhaft genutzt werden, wenn die Zielgeräte mit einer eigenen Intelligenz (in Form von Hardware und Software) ausgestattet sind, die eine selbstorganisiertes Agieren des Zielgerätes erlaubt. Als Teil des Bahnautomatisierungssystems kann in dem betreffenden Zielgerät ein Update-Status ermittelt werden, der beinhaltet, ob dieses für ein Update verfügbar ist oder im Rahmen der Arbeit des Bahnautomatisierungssystems benötigt wird, sodass eine Aktualisierung den Bahnbetrieb stören würde. Selbstverständlich kann dies auch mit Informationen kombiniert werden, die beispielsweise in einem Aktivierungsclient gesammelt werden und hinsichtlich der Information, wann ein Update durchgeführt werden kann, ausgewertet werden.

Gemäß einer Ausgestaltung der Erfindung ist vorgesehen, dass das Zielgerät bei seiner ersten Inbetriebnahme in dem Geräteverbund die Update-Statusinformation anzeigt.

Diese Ausgestaltung der Erfindung trägt dem Umstand Rechnung, dass ein mögliches Zielgerät bei seiner Inbetriebnahme möglicherweise nicht mit der aktuellen Version der Betriebssoftware ausgestattet ist. In diesem Fall muss die Betriebssoftware ein Update erfahren, welches gemäß dem oben genannten Verfahren vorteilhaft auf einfache Weise durchgeführt werden kann. Dies stellt eine reibungslose Funktion des neu eingesetzten Zielgerätes in dem Bahnautomatisierungssystems sicher.

Gemäß einer Ausgestaltung der Erfindung ist vorgesehen, dass nach einem Update mit dem Zielgerät eine Funktionsüberprüfung durchgeführt wird, und der Updatestatus nur verlassen wird, wenn die Funktionsprüfung erfolgreich war.

Durch die zusätzliche Maßnahme einer Sicherheitsprüfung wird der Sicherheitsstandard beim Update des Zielgerätes vorteilhaft vergrößert. Nach erfolgtem Update gibt die Funktionsprüfung Aufschluss darüber, ob das Zielgerät die ihm zugeordnete Funktion erfüllen kann. Weiterhin kann geprüft werden, ob eine Kommunikation mit anderen Geräten des Bahnautomatisierungssystems noch möglich ist, wie geplant. Nur wenn die Funktionsprüfung ergibt, dass die Funktion des Zielgerätes auch nach dem Update gewährleistet ist, wird dieses wieder in den gewöhnlichen Betrieb des Bahnautomatisierungssystems integriert.

Die Funktionsprüfung kann live in dem Bahnautomatisierungssystem erfolgen. Hierzu kann ein abgesicherter Funktionsmodus vorgesehen werden. Vorteilhaft ist allerdings alternativ, eine Funktionsprüfung mit einer geeigneten Software durchzuführen, die den Betrieb des Bahnautomatisierungssystems nicht beeinflusst. Die genannte Aufgabe wird alternativ mit dem eingangs angegebenen Anspruchsgegenstand (Netzwerk) erfindungsgemäß durch Anspruch 12 gelöst.

Die mit dem genannten Netzwerk verbundenen Vorteile sind im Rahmen der Erläuterung des obenstehenden Verfahrens bereits genannt worden. An dieser Stelle sollen diese nicht noch einmal wiederholt werden, da sie sich analog auch auf das Netzwerk übertragen lassen.

Gemäß einer Ausgestaltung der Erfindung ist vorgesehen, dass ein Aktivierungsclient zur Verfügung steht mit einer ersten Schnittstelle zum zweiten Programmmodul. Auch die mit dem Aktivierungsclient verbundenen Vorteile wurden bereits erläutert.

Des Weiteren wird gemäß Anspruch 14 ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird gemäß Anspruch 15 eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- FIG 1: ein Ausführungsbeispiel eines Bahnautomatisierungssystems, bei dem ein Ausführungsbeispiel des erfindungsgemäßen Verfahrens angewendet werden kann, schematisch,
- FIG 2: ein Ausführungsbeispiel des erfindungsgemäßen als Bahnautomatisierungssystem ausgeführten Netzwerks als Blockschaltbild,
- FIG 3: ein Ausführungsbeispiel des erfindungsgemäßen Verfahrens als Datenflussdiagramm, wobei die Funktionseinheiten der Anordnung gemäß FIG 2 durch strichpunktierte angedeutet sind.

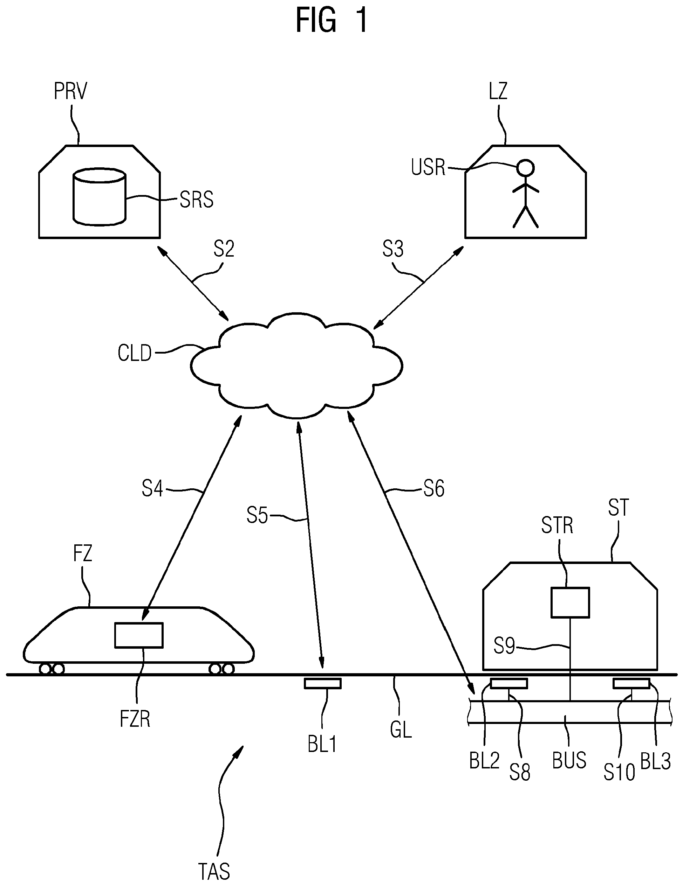

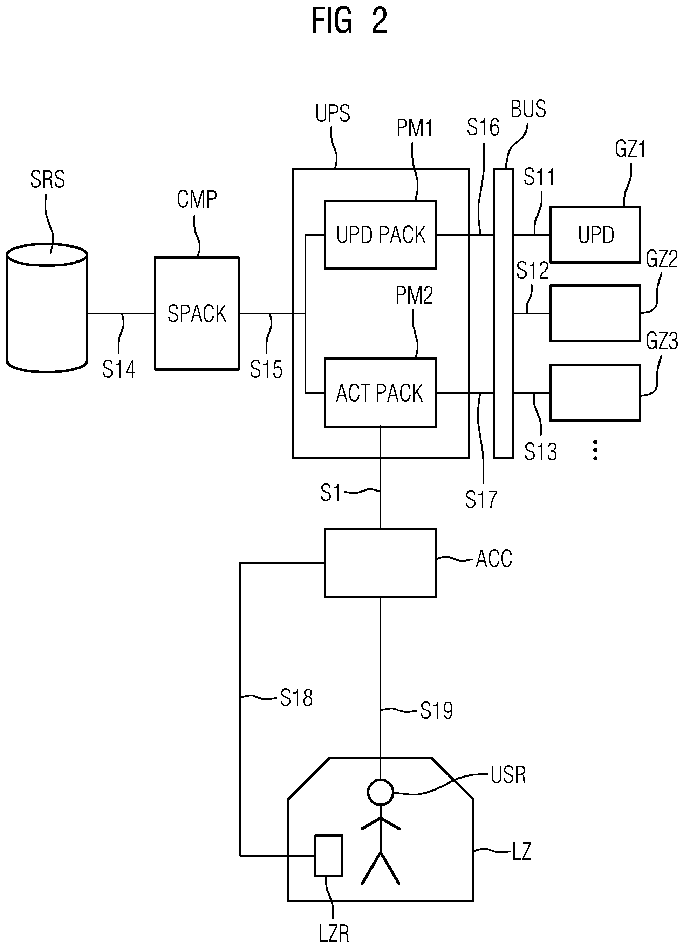

Gemäß FIG 1 ist ein Bahnautomatisierungssystem TAS dargestellt. Stellvertretend für dieses ist ein Gleis GL dargestellt, auf dem ein Fahrzeug FZ fährt und welches in einen Bahnhof ST führt. Das Fahrzeug FZ ist mit einem Fahrzeugrechner FZR ausgestattet. Ebenso ist der Bahnhof ST mit einem Rechner STR ausgestattet. Weiterhin sind am Gleis GL drei Balisen BL1, BL2, BL3 verbaut, wobei sich die Balisen BL2 und BL3 im Bahnhof ST befinden. Die Balisen BL1, BL2, BL3 sowie der Fahrzeugrechner FZR und der Rechner STR im Bahnhof ST bilden mögliche Zielgeräte (vgl. FIG 2: GZ1, GZ2, GZ3) für Softwareupdates, die über einen Provider PRV mittels einer Software Release Speichereinheit SRS zur Verfügung gestellt werden können. Ein Management einzelner Softwareupdates kann beispielsweise über eine Leitzentrale LZ oder einen Benutzer USR, der gemäß FIG 1 in der Leitzentrale LZ arbeitet, durchgeführt werden.

Im Bahnhof ST kommt ein Bussystem BUS zum Einsatz. An das Bussystem BUS sind die Balise BL2 über eine achte Schnittstelle S8, die Balise BL3 über eine zehnte Schnittstelle S10 und der Rechner STR über eine neunte Schnittstelle S9 verbunden. Weiterhin sind Schnittstellen der Speichereinheit SRS über eine zweite Schnittstelle S2, die Leitzentrale LZ über eine dritte Schnittstelle S3, der Fahrzeugrechner FZR über eine vierte Schnittstelle S4, die erste Balise BL1 über eine fünfte Schnittstelle S5 sowie das Bussystem BUS über eine sechste Schnittstelle S6 mit einer Cloud CLD verbunden, die symbolisieren soll, dass für eine Kommunikation der genannten Funktionseinheiten auch ein Cloud-Computing genutzt werden kann.

Der FIG 2 lässt sich die Systemarchitektur eines Ausführungsbeispiels eines erfindungsgemäßen Netzwerks als Blockschaltbild entnehmen. Die hier zwischen den einzelnen Blöcken verwendeten Schnittstellen können unterschiedlicher Natur (kabelgebunden, kabellos, cloudbasiert) sein. Dies wurde in FIG 1 beispielhaft dargestellt. In FIG 2 wird jedoch darauf verzichtet, die Natur der Schnittstellen genauer zu spezifizieren. Lediglich für die Zielgeräte GZ1, GZ2, GZ3 kommt, wie in FIG1 beschrieben, das Bussystem BUS mit einer elften Schnittstelle S11 zum ersten Zielgerät GZ1, der zwölften Schnittstelle S12 zu dem zweiten Zielgerät GZ2 und einer dreizehnten Schnittstelle S13 zum dritten Zielgerät GZ3 zum Einsatz.

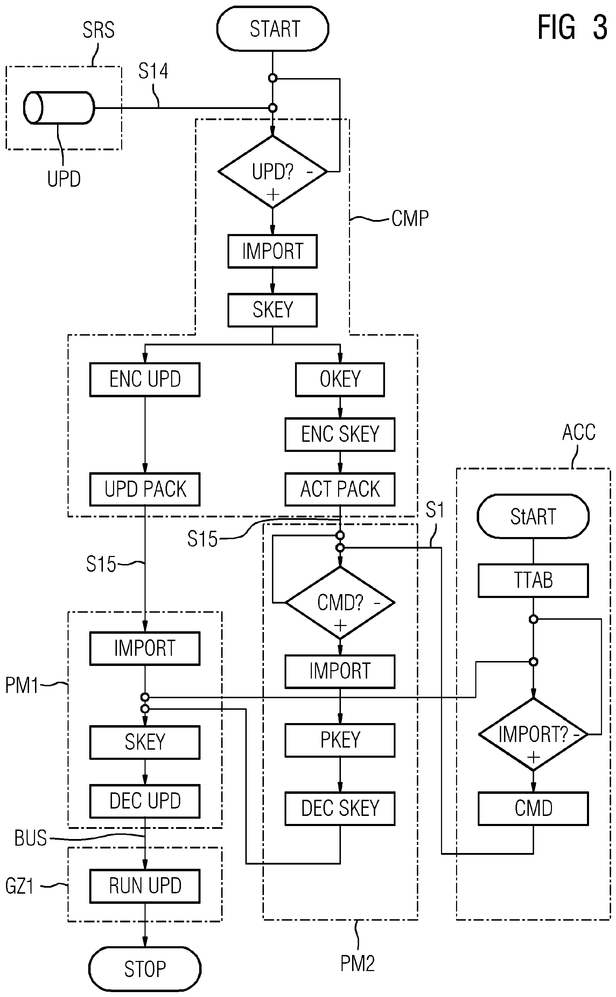

Zu erkennen, wie in FIG 1, ist auch die Software Release Speichereinheit SRS. Diese übermittelt ein anstehendes Update als Softwarepaket über eine vierzehnte Schnittstelle S14 an einen Computer CMP, der zur Vorbereitung bzw. Aufbereitung des Updates (UPD, siehe FIG 3) dient.

Über eine fünfzehnte Schnittstelle S15 wird das Update an einen Updateserver UPS übergeben. In diesem ist ein erstes Programmodul PM1 und ein zweites Programmodul PM2 installiert, die beide über die fünfzehnte Schnittstelle S15 an den Computer CMP angebunden sind. Außerdem kommunizieren das erste Programmodul PM1 über eine sechzehnte Schnittstelle S16 und das zweite Programmodul PM2 über eine siebzehnte Schnittstelle S17 mit dem Bussystem BUS.

Das erste Programmodul PM1 dient dazu, ein verschlüsseltes Update-Datenpaket UPD PACK zu erstellen (es ist auch die Erstellung mehrere Datenpakete möglich, wenn das Update in mehreren Stufen durchgeführt werden soll, nicht dargestellt). Dieses wird beispielsweise über die sechzehnte Schnittstelle S16, das Bussystem BUS und die elfte Schnittstelle S11 an das erste Zielgerät GZ1 übergeben. Das zweite Programmodul PM2 generiert demgegenüber ein Datenpaket zur Aktivierung des Updates ACT PACK, welches beispielsweise über die siebzehnte Schnittstelle S17 und das Bussystem BUS und die elfte Schnittstelle S11 in das erste Zielgerät GZ1 übergeben werden kann und dort einen Updateprozess initiieren kann, sodass das Update UPD installiert werden kann. Wie zu FIG 3 noch näher erläutert werden wird, wird das Updatemanagement in dem ersten Programmodul PM1 und dem zweiten Programmodul PM2 durch eine Verschlüsselung realisiert.

Um den Updateprozess zu kontrollieren, kann über einen Leitzentralenrechner LZR automatisch über eine achtzehnte Schnittstelle S18 oder durch den Benutzer USR über eine neunzehnte Schnittstelle S19 manuell ein Aktivierungsclient ACC genutzt werden, um über eine erste Schnittstelle S1 das Datenpaket zur Aktivierung des Updates ACT PACK im zweiten Programmmodul PM2 zur Übertragung an das erste Zielgerät GZ1 freizugeben.

Der Ablauf des erfindungsgemäßen Verfahrens kann anhand des Ausführungsbeispiels von FIG 3 eingehender erläutert werden. Nach einem Beginn des Verfahrens START kann ein Update UPD, welches in der Speichereinheit SRS zur Verfügung steht, in den Computer CMP für das Updateverfahren vorbereitet werden. Im Computer CMP wird in bestimmten Zeitabständen geprüft, ob ein Update verfügbar ist. Wenn ja, erfolgt ein Datenimport IMPORT und es wird in einem Erstellungsschritt ein symmetrischer Schlüssel SKEY erzeugt. Dieser symmetrische Schlüssel SKEY wird dann dazu benutzt, in einem Verschlüsselungsschritt ENC UPD das Update UPD symmetrisch zu verschlüsseln. Das Update UPD bildet dann ein Datenpaket UPD PACK, welches aus dem Computer CMP ausgegeben werden kann, und zwar an das Programmmodul PM1.

Außerdem wird ein im Computer CMP verfügbarer öffentlicher Schlüssel OKEY verwendet, um in einem weiteren Verschlüsselungsschritt ENC SKEY den symmetrischen Schlüssel SKEY zu verschlüsseln. Dieser wird in ein Datenpaket zur Aktivierung des Updates ACT PACK integriert.

Das Datenpaket für das Update UPD PACK wird in das erste Programmodul PM1 übertragen, was durch einen Datenimport IMPORT erfolgt. Damit steht das besagte Datenpaket UPD PACK im ersten Programmodul PM1 zur Verfügung, was dem Aktivierungsclient ACC mitgeteilt wird.

Wird der Aktivierungsclient ACC gestartet, kann die Möglichkeit, ein Update für beispielsweise das erste Zielgerät GZ1 durchzuführen, mit einem Fahrplan TTAB oder anderen Informationen zum Betrieb des Bahnautomatisierungssystems TAS abgeglichen werden. Lässt sich aus dieser Untersuchung eine Gelegenheit für ein Update UPD ableiten, so wird eine Abfrage gestartet, ob der Dateiimport IMPORT in das erste Programmodul PM1, wie oben beschrieben, bereits erfolgt ist. Wenn dies nicht der Fall ist, wird ein späterer Zeitpunkt für ein mögliches Update UPD ermittelt. Ist der Import bereits erfolgt, so wird ein Aktivierungsbefehl für das Update CMD aus dem Aktivierungsclient ACC ausgegeben und durch das zweite Programmmodul PM2 verarbeitet.

Im zweiten Programmodul PM2 erfolgt regelmäßig eine Abfrage, ob ein Aktivierungsbefehl CMD vorliegt. Wenn dem nicht so ist, wird die Abfrage in regelmäßigen Zeitabständen wiederholt. Ansonsten erfolgt ein Dateiimport IMPORT des Datenpakets zur Aktivierung des Updates ACT PACK, wobei erst dieser Import ein Auslösen des Updates überhaupt ermöglicht. In diesem Fall wird der im zweiten Programmodul PM2 verfügbare private, asymmetrische Schlüssel PKEY verwendet, um den symmetrischen Schlüssel SKEY in einem Entschlüsselungsschritt DEC SKEY zu decodieren. Somit steht der symmetrische Schlüssel SKEY nun zur Verfügung, um in das erste Programmodul PM1 übergeben zu werden.

Im ersten Programmodul PM1 erfolgt nun mittels des symmetrischen Schlüssel SKEY in einem Entschlüsselungsschritt DEC UPD eine Decodierung des Updates UPD, welches dann an das erste Zielgerät GZ1 übergeben werden kann. In dem ersten Zielgerät GZ1 wird in einem Ausführungsschritt RUN UPD das Update UPD ausgeführt, also installiert. Nicht dargestellt in FIG 3 ist die Möglichkeit, dass das erste Zielgerät GZ1 nach erfolgreichem Update eine Meldung an den Aktivierungsclient ACC überträgt, um das erfolgreiche Update zu dokumentieren.

### Bezugszeichenliste

- PRV: Provider
- CLD: Cloud
- TAS: Bahnautomatisierungssystem
- ST: Bahnhof
- STR: Rechner im Bahnhof
- GL: Gleis
- BL1 ... BL3: Balise
- FZ: Fahrzeug
- FZR: Fahrzeugrechner

- SRS: Software Release Speichereinheit
- CMP: Computer
- UPS: Update Server
- ACC: Aktivierungsclient
- GZ1 ... GZ3: Zielgerät
- LZ: Leitzentrale
- LZR: Leitzentralenrechner
- USR: Benutzer
- PM1: erstes Programmmodul zum Laden des Updates
- PM2: zweites Programmmodul zum Aktivieren des Updates
- S1 ... S19: Schnittstelle

- UPD: Update für Software
- ACT: Aktivierung des Updates
- PACK: Datenpaket
- IMPORT: Datenimport
- ENC: Verschlüsselungsschritt
- DEC: Entschlüsselungsschritt
- RUN: Ausführungsschritt
- SKEY: symmetrischer Schlüssel
- OKEY: öffentlicher asymmetrischer Schlüssel
- PKEY: privater asymmetrischer Schlüssel
- TTAB: Fahrplan
- CMD: Aktivierungsbefehl
- BUS: BUS-System

## Patentansprüche

1. Verfahren zum ferngesteuerten Aktualisieren eines Zielgerätes (GZ1 ... GZ3) in einem Netzwerk,
wobei rechnergestützt die Schritte
• einer Verschlüsselung eines Updates (UPD) für die Software des Zielgerätes (GZ1 ... GZ3), wobei
• ein symmetrischer Schlüssel (SKEY) erstellt wird,
• das Update mit dem symmetrischen Schlüssel (SKEY) verschlüsselt wird,
• eine Verschlüsselung des symmetrischen Schlüssels (SKEY) mit einem öffentlichen, asymmetrischen Schlüssel (OKEY) des Zielgeräts (GZ1 ... GZ3) erfolgt,
• einer Übertragung des verschlüsselten Updates an das Zielgerät (GZ1 ... GZ3),
• einer Übertragung des verschlüsselten, symmetrischen Schlüssels (SKEY) an das Zielgerät (GZ1 ... GZ3) und einer Entschlüsselung des symmetrischen Schlüssels (SKEY) mit einem privaten asymmetrischen Schlüssel (PKEY) im Zielgerät (GZ1 ... GZ3),
• einer Entschlüsselung des Updates mit dem entschlüsselten symmetrischen Schlüssel (SKEY) im Zielgerät (GZ1 ... GZ3),
• einer Installation des Updates auf dem Zielgerät (GZ1 ... GZ3),
bei der Aktualisierung durchlaufen werden,
**dadurch gekennzeichnet,**
**dass** die Übertragung des verschlüsselten symmetrischen Schlüssels (SKEY) in Abhängigkeit von einer Verfügbarkeit des Zielgerätes (GZ1 ... GZ3) für ein Update erfolgt, wobei
• das Zielgerät für das Update dann verfügbar ist, wenn das Zielgerät im Netzwerk nicht zur Bewältigung einer Aufgabe benötigt wird, welche keinen Aufschub duldet,
• eine gezielte Steuerung des Zeitpunkts, zu dem das Update installiert werden soll, durch das Senden des verschlüsselten symmetrischen Schlüssels an das Zielgerät erfolgt.

2. Verfahren nach Anspruch 1,
**dadurch gekennzeichnet,**
**dass** das Netzwerk durch ein Bahnautomatisierungssystem (TAS) gebildet ist.

3. Verfahren nach einem der voranstehenden Ansprüche,
**dadurch gekennzeichnet,**
**dass** die Übertragung des verschlüsselten symmetrischen Schlüssels (SKEY) automatisch oder über eine Benutzerschnittstelle (S19) initiiert wird.

4. Verfahren nach einem der voranstehenden Ansprüche,
**dadurch gekennzeichnet,**
**dass** ein Nachweis, dass das Zielgerät (GZ1 ... GZ3) aktualisiert wurde, erfolgt.

5. Verfahren nach einem der voranstehenden Ansprüche,
**dadurch gekennzeichnet,**
**dass** das Update (UPD) in mehreren Stufen durchgeführt wird, wobei für jede Stufe des Updates ein Softwarepaket und ein zugehöriger verschlüsselter symmetrischer Schlüssel (SKEY) erzeugt wird.

6. Verfahren nach einem der voranstehenden Ansprüche,
**dadurch gekennzeichnet,**
**dass** zur Initiierung der Übertragung des verschlüsselten symmetrischen Schlüssels (SKEY) ein Aktivierungsclient (ACC) genutzt wird.

7. Verfahren nach einem der voranstehenden Ansprüche,
**dadurch gekennzeichnet,**
**dass** eine Steuerung der Updates (UPD) durch die Übertragung des verschlüsselten, symmetrischen Schlüssels (SKEY) in Abhängigkeit von der Verfügbarkeit des Zielegerätes durchgeführt wird.

8. Verfahren nach Anspruch 7,
**dadurch gekennzeichnet,**
**dass** die Steuerung der Updates auch im Hinblick auf die Kompatibilität des Zielgerätes (GZ1 ... GZ3) mit anderen Zielgeräten (GZ1 ... GZ3) des Geräteverbundes nach dem Update vorgenommen wird.

9. Verfahren nach einem der Ansprüche 7 oder 8,
**dadurch gekennzeichnet,**
**dass** das Zielgerät (GZ1 ... GZ3) oder die Zielegeräte die Verfügbarkeit für ein Update durch eine Update-Statusinformation anzeigen.

10. Verfahren nach Anspruch 9,
**dadurch gekennzeichnet,**
**dass** das Zielgerät (GZ1 ... GZ3) bei seiner ersten Inbetriebnahme in dem Netzwerk die Update-Statusinformation anzeigt.

11. Verfahren nach einem der voranstehenden Ansprüche,
**dadurch gekennzeichnet,**
**dass** nach einem Update mit dem Zielgerät (GZ1 ... GZ3) eine Funktionsüberprüfung durchgeführt wird, und der Updatestatus nur verlassen wird, wenn die Funktionsprüfung erfolgreich war.

12. Netzwerk mit mindestens einem Zielgerät (GZ1 ... GZ3),
wobei das Netzwerk zum ferngesteuerten Aktualisieren des Zielgerätes (GZ1 ... GZ3) eingerichtet ist, um rechnergestützt
• in einer Software Release Speichereinheit (SRS) ein Update für die Software des Zielgerätes (GZ1 ... GZ3) bereitzustellen,
• in einem Computer (CMP) eine gerätespezifische Verschlüsselung des Updates durchzuführen, wobei
• ein symmetrischer Schlüssel (SKEY) erstellt wird,
• das Update mit dem symmetrischen Schlüssel (SKEY) verschlüsselt wird,
• eine Verschlüsselung des symmetrischen Schlüssels (SKEY) mit einem öffentlichen, asymmetrischen Schlüssel erfolgt,
• auf einem Update Server (UPS)
• mit einem ersten Programmmodul (PM1) eine Übertragung des verschlüsselten Updates an das Zielgerät (GZ1 ... GZ3) durchzuführen,
• mit einem zweiten Programmodul eine Übertragung des verschlüsselten, symmetrischen Schlüssels (SKEY) an das Zielgerät (GZ1 ... GZ3) durchzuführen,
• in dem Zielgerät (GZ1 ... GZ3)
• eine Entschlüsselung des symmetrischen Schlüssels (SKEY) mit einem privaten asymmetrischen Schlüssel (PKEY) des Zielgerätes (GZ1 ... GZ3) durchzuführen,
• eine Entschlüsselung des Updates mit dem entschlüsselten symmetrischen Schlüssel (SKEY) durchzuführen,
• eine Installation des Updates auf dem Zielgerät (GZ1 ... GZ3) durchzuführen,
**dadurch gekennzeichnet,**
**dass**
die Übertragung des verschlüsselten symmetrischen Schlüssels in Abhängigkeit von einer Verfügbarkeit des Zielgerätes für ein Update durchgeführt wird, wobei
• das Zielgerät für das Update dann verfügbar ist, wenn das Zielgerät im Netzwerk nicht zur Bewältigung einer Aufgabe benötigt wird, welche keinen Aufschub duldet,
• eine gezielte Steuerung des Zeitpunkts, zu dem das Update installiert werden soll, durch das Senden des verschlüsselten symmetrischen Schlüssels an das Zielgerät erfolgt.

13. Netzwerk nach Anspruch 12,
**dadurch gekennzeichnet,**
**dass** ein Aktivierungsclient (ACC) vorgesehen ist, mit einer Schnittstelle (S1) zum zweiten Programmmodul (PM1).

14. Computerprogrammprodukt mit Programmbefehlen zur Durchführung des Verfahrens nach einem der Ansprüche 1 - 13.

15. Bereitstellungsvorrichtung für das Computerprogrammprodukt nach Anspruch 14, wobei durch die Bereitstellungsvorrichtung das Computerprogrammprodukt gespeichert und/oder bereitstellbar ist.

## Claims

1. Method for remotely updating a target device (GZ1 ... GZ3) in a network,
wherein the steps of
• encrypting an update (UPD) for the software of the target device (GZ1 ... GZ3), wherein
• a symmetrical key (SKEY) is created,
• the update is encrypted with the symmetrical key (SKEY),
• an encryption of the symmetrical key (SKEY) is carried out with a public, asymmetrical key (OKEY) of the target device (GZ1 ... GZ3),
• transmitting the encrypted update to the target device (GZ1 ... GZ3),
• transmitting the encrypted, symmetrical key (SKEY) to the target device (GZ1 ... GZ3) and decrypting the symmetrical key (SKEY) with a private asymmetrical key (PKEY) in the target device (GZ1 ... GZ3),
• decrypting the update with the decrypted symmetrical key (SKEY) in the target device (GZ1 ... GZ3),
• installing the update on the target device (GZ1 ... GZ3), are run through during the update in a computer-aided fashion, **characterised in that**
the transmission of the encrypted symmetrical key (SKEY) is carried out as a function of an availability of the target device (GZ1 ... GZ3) for an update, wherein
• the target device is then available for the update when the target device in the network is not required to complete a task which bears no delay,
• a targeted control of the point in time at which the update is to be installed is carried out by sending the encrypted symmetrical key to the target device.

2. Method according to claim 1,
**characterised in that**
the network is formed by a rail automation system (TAS).

3. Method according to one of the preceding claims,
**characterised in that**
the transmission of the encrypted, symmetrical key (SKEY) is initiated automatically or by way of a user interface (S19).

4. Method according to one of the preceding claims,
**characterised in that**
evidence that the target device (GZ1 ... GZ3) has been updated is provided.

5. Method according to one of the preceding claims,
**characterised in that**
the update (UPD) is carried out in several stages, wherein a software packet and an associated encrypted, symmetrical key (SKEY) is generated for each stage of the update.

6. Method according to one of the preceding claims,
**characterised in that**
an activation client (ACC) is used to initiate the transmission of the encrypted, symmetrical key (SKEY).

7. Method according to one of the preceding claims,
**characterised in that**
a control of the updates (UPD) is carried out by transmitting the encrypted, symmetrical key (SKEY) as a function of the availability of the target device.

8. Method according to claim 7,
**characterised in that**
the control of the updates is also performed in respect of the compatibility of the target deice (GZ1 ... GZ3) with other target devices (GZ1 ... GZ3) of the device compound after the update.

9. Method according to one of claims 7 or 8,
**characterised in that**
the target device (GZ1 ... GZ3) or the target devices indicate the availability of an update by an item of update status information.

10. Method according to claim 9,
**characterised in that**
the target device (GZ1 ... GZ3) indicates the item of update status information during its first commissioning in the network.

11. Method according to one of the preceding claims,
**characterised in that**
a function test is carried out after an update with the target device (GZ1 ... GZ3), and the update status is only relinquished if the function test was successful.

12. Network with at least one target device (GZ1 ... GZ3),
wherein the network is configured for remotely updating the target device (GZ1 ... GZ3) in order, in a computer-aided fashion,
• to provide an update for the software of the target device (GZ1 ... GZ3) in a software release storage unit (SRS),
• to carry out a device-specific encryption of the update in a computer (CMP), wherein
• a symmetrical key (SKEY) is created,
• the update is encrypted with the symmetrical key (SKEY),
• an encryption of the symmetrical key (SKEY) is carried out with a public, asymmetrical key,
• on an update server (UPS)
• to carry out a transmission of the encrypted update to the target device (GZ1 ... GZ3) with a first program module (PM1),
• to carry out a transmission of the encrypted, symmetrical key (SKEY) to the target device (GZ1 ... GZ3) with a second program module,
• in the target device (GZ1 ... GZ3)
• to carry out a decryption of the symmetrical key (SKEY) with a private, asymmetrical key (PKEY) of the target device (GZ1 ... GZ3),
• to carry out a decryption of the update with the decrypted, symmetrical key (SKEY),
• to carry out an installation of the update on the target device (GZ1 ... GZ3),
**characterised in that**
the transmission of the encrypted, symmetrical key is carried out as a function of an availability of the target device for an update, wherein
∘ the target device is then available for the update if the target device in the network is not required to complete a task which bears no delay,
∘ a targeted control of the point in time at which the update is to be installed is carried out by sending the encrypted, symmetrical key to the target device.

13. Network according to claim 12,
**characterised in that**
an activation client (ACC) is provided, with an interface (S1) to the second program module (PM1).

14. Computer program product with program commands for carrying out the method according to one of claims 1 - 13.

15. Provisioning apparatus for the computer program product according to claim 14, wherein the computer program product is stored and/or can be provided by means of the provisioning apparatus.

## Revendications

1. Procédé de mise à jour télécommandée d'un appareil (GZ1 ... GZ3) cible dans un réseau,
dans lequel, en étant assisté par ordinateur, on passe, lors de la mise à jour, par les stades
• un chiffrement d'une update (UPD) de logiciel de l'appareil (GZ1 ... GZ3) cible, dans lequel
• on établit une clé (SKEY) symétrique,
• on chiffre l'update par la clé (SKEY) symétrique,
• un chiffrement de la clé (SKEY) symétrique s'effectue par une clé (OKEY) publique asymétrique de l'appareil (GZ1 ... GZ3) cible,
• une transmission de l'update chiffrée à l'appareil (GZ1 ... GZ3) cible,
• une transmission de la clé (SKEY) symétrique chiffrée à l'appareil (GZ1 ... GZ3) cible et un déchiffrement de la clé (SKEY) symétrique par une clé (PKEY) privée asymétrique dans l'appareil (GZ1 ... GZ3) cible,
• un déchiffrement dans l'appareil (GZ1 ... GZ3) cible de l'update par la clé (SKEY) symétrique déchiffrée,
• une installation de l'update sur l'appareil (GZ1 ... GZ3) cible,
**caractérisé**
**en ce que** la transmission de la clé (SKEY) symétrique chiffrée s'effectue en fonction d'une disponibilité de l'appareil (GZ1 ... GZ3) cible à une update, dans lequel
• l'appareil cible est disponible à l'update, si l'appareil cible dans le réseau n'est pas nécessaire à la maîtrise d'une tâche, qui ne souffre pas de retard,
• une commande ciblée de l'instant où l'update doit être installée s'effectue par l'envoi à l'appareil cible de la clé symétrique chiffrée.

2. Procédé suivant la revendication 1,
**caractérisé**
**en ce que** le réseau est formé par un système (TAS) d'automatisation de voies.

3. Procédé suivant l'une des revendications précédentes,
**caractérisé**
**en ce que** on lance la transmission de la clé (SKEY) symétrique chiffrée automatiquement ou par une interface (S19) d'utilisateur.

4. Procédé suivant l'une des revendications précédentes,
**caractérisé**
**en ce qu'**il est produit une preuve que l'appareil (GZ1 **...** GZ3) cible a été mis à jour.

5. Procédé suivant l'une des revendications précédentes,
**caractérisé**
**en ce que** l'on effectue l'update (UPD) en plusieurs stades, dans lequel on produit, pour chaque stade de l'update, un paquet logiciel et une clé (SKEY) symétrique chiffrée, qui lui appartient.

6. Procédé suivant l'une des revendications précédentes,
**caractérisé**
**en ce que**, pour lancer la transmission de la clé (SKEY) symétrique chiffrée, on utilise un client (ACC) d'activation.

7. Procédé suivant l'une des revendications précédentes,
**caractérisé**
**en ce que** l'on effectue, en fonction de la disponibilité de l'appareil cible, une commande de l'update (UPD) par la transmission de la clé (SKEY) symétrique chiffrée.

8. Procédé suivant la revendication 7,
**caractérisé**
**en ce que** l'on effectue, après l'update, la commande de l'update également en ce qui concerne la compatibilité de l'appareil (GZ1 ... GZ3) cible avec d'autres appareils (GZ1 ... GZ3) cibles de l'ensemble d'appareils.

9. Procédé suivant l'une des revendications 7 ou 8,
**caractérisé**
**en ce que** l'appareil (GZ1 ... GZ3) cible ou les appareils cibles indiquent la disponibilité à une update par une information de statut de l'update.

10. Procédé suivant la revendication 9,
**caractérisé**
**en ce que** l'appareil (GZ1 ... GZ3) cible indique, lors de sa première mise en service dans le réseau, l'information de statut de l'update.

11. Procédé suivant l'une des revendications précédentes,
**caractérisé**
**en ce qu'**après une update, on effectue, par l'appareil (GZ1 ... GZ3) cible, un contrôle de fonction et on ne quitte le statut d'update que si le contrôle de fonction a été couronné de succès.

12. Réseau comprenant au moins un appareil (GZ1 ... GZ3) cible, dans lequel
le réseau est agencé pour la mise à jour télécommandée de l'appareil (GZ1 ... GZ3) cible pour, en étant assisté par ordinateur,
• disposer, dans une unité (SRS) de mémoire software release, d'une update pour le logiciel de l'appareil (GZ1 ... GZ3) cible,
• effectuer, dans un ordinateur (CMP), un chiffrement, spécifique à un appareil, de l'update, dans lequel
• on établit une clé (SKEY) symétrique,
• on chiffre l'update par la clé (SKEY) symétrique,
• un chiffrement de la clé (SKEY) symétrique s'effectue par une clé (OKEY) publique asymétrique de l'appareil (GZ1 ... GZ3) cible,
• sur un serveur (UPS) d'update,
• effectuer, par un premier module (PM1) de programme, une transmission de l'update chiffrée à l'appareil (GZ1 ... GZ3) cible,
• effectuer, par un deuxième module de programme, une transmission, à l'appareil (GZ1 ... GZ3) cible, de la clé (SKEY) symétrique chiffrée,
• dans l'appareil (GZ1 ... GZ3) cible
• effectuer un déchiffrement de la clé (SKEY) symétrique par une clé (PKEY) asymétrique privée de l'appareil (GZ1 ... GZ3) cible,
• effectuer un déchiffrement de l'update par la clé (SKEY) symétrique déchiffrée,
• effectuer une installation de l'update sur l'appareil (GZ1 ... GZ3) cible,
**caractérisé**
**en ce que**
l'on effectue la transmission de la clé symétrique chiffrée en fonction d'une disponibilité de l'appareil cible à une update, dans lequel
• l'appareil cible est disponible à l'update, si l'appareil cible dans le réseau n'est pas nécessaire à la maîtrise d'une tâche, qui ne souffre pas de retard,
• une commande ciblée de l'instant où l'update doit être installée s'effectue par l'envoi à l'appareil cible de la clé symétrique chiffrée.

13. Réseau suivant la revendication 12,
**caractérisé**
**en ce qu'**il est prévu un client (ACC) d'activation ayant une interface (S1) avec le deuxième module (PM1) de programme.

14. Produit de programme d'ordinateur ayant des instructions de programme pour exécuter le procédé suivant l'une des revendications 1 à 13.

15. Dispositif de mise à disposition du produit de programme d'ordinateur suivant la revendication 14, dans lequel, par le dispositif de mise à disposition, le produit de programme d'ordinateur est mis en mémoire et/ou peut être mis à disposition.
